## Europäisches Patentamt
## European Patent Office
## Office européen des brevets

(19)

(11) Publication number: **0 030 840**
**B1**

(12) # EUROPEAN PATENT SPECIFICATION

(45) Date of publication of patent specification: **18.05.83**

(21) Application number: **80304447.8**

(22) Date of filing: **09.12.80**

(51) Int. Cl.³: **C 09 D 3/72, C 08 G 18/62, C 09 D 3/80, C 08 G 18/08, C 09 K 3/30**

(54) **Method for preparing a two-component polyurethane lacquer atomisable from a pressurised container.**

(30) Priority: **14.12.79 DE 2950373**

(43) Date of publication of application:
**24.06.81 Bulletin 81/25**

(45) Publication of the grant of the patent:
**18.05.83 Bulletin 83/20**

(84) Designated Contracting States:
**AT BE CH FR GB IT LI NL**

(56) References cited:
**DE - B - 1 247 006**
**FR - A - 1 376 585**
**FR - A - 1 447 872**
**US - A - 3 343 718**
**US - A - 3 413 254**

(73) Proprietor: **HERMANN WIEDERHOLD G.m.b.H.**
**Postfach 940**
**D-4010 Hilden/Rhld. (DE)**

(72) Inventor: **Barrenstein, Hans Peter**
**Posenerstrasse 20**
**D-5600 Wuppertal 2 (DE)**
Inventor: **Stein, Ruth**
**Uhlandstrasse 37**
**D-5650 Solingen 11 (DE)**

(74) Representative: **Wood, Dennis John Cecil et al,**
**Imperial Chemical Industries PLC Legal**
**Department: Patents Thames House North**
**Millbank**
**London SW1P 4QG (GB)**

Courier Press, Leamington Spa, England.

**O O30 840**

# Method for preparing a two-component polyurethane lacquer atomisable from a pressurised container

The invention concerns a method for the preparation of a two-component polyurethane lacquer atomisable from a pressurised container, the lacquer consisting of (i) a basic lacquer component in the form of a prepolymer containing hydroxyl groups which is dissolved in an organic solvent and is contained together with a propellant in a first pressurised container, and (ii) a hardener component on the basis of a polyisocyanate dissolved in an organic solvent which together with a propellant is contained in a second pressurised container, and the lacquer being obtainable in a ready-for-use form by transfer of one component from its pressurised container into the pressurised container of the second component and mixing the two components.

Two-component polyurethane lacquers are characterised by good weather resistance and chemical resistance, high mechanical resistance and good adhesion to the substrate. They are excellently suited, therefore, both for a first coat and as a repair lacquer and they can in the second case also be applied over old one-component coatings. High quality two-component polyurethane lacquers have been applied up to the present time only with the spray gun; an aerosol product is not available. A two-component polyurethane adhesive is already known from US Patent 3343718, according to which a base component from adipic acid and hexane triol together with a propellant — propane — is contained in a first pressurised container and a hardener component consisting of a polyisocyanate together with a propellant — a mixture of monofluorotrichloromethane and difluorodichloromethane — is contained in a second pressurised container, and the ready-for-use adhesive is obtained when one component is transferred from its pressurised container into the pressurised container of the second component and both components are mixed; however, this principle cannot be adapted as it stands to two-component polyurethane lacquers, such as are known for example from German Auslegeschrift 1247006. The prepolymers used as the basic lacquer components are poorly compatible with the common propellants such as monofluorotrichloromethane (R11), difluorodichloromethane (R12), propane, butane, etc. In many cases before, but at the latest, after, the addition of the isocyanate hardener, insoluble products are formed in the form of sludge or lumps, so that the lacquer can no longer be applied. Some prepolymers are known which are compatible with the common propellants, but these prepolymers give coating films which do not have adequate surface hardness, chemical resistance and solvent resistance. All hitherto known attempts to make available two-component polyurethane lacquers in pressurised containers, such as aerosol cans, have remained unsuccessful up to now, because both the individual components in separate pressurised containers as well as the mixture of the two components in a single aerosol can have an inadequate storage stability for all practical purposes.

Hence there was the problem of making available a two-component polyurethane lacquer which not only has good application and film properties such as good weather resistance, chemical resistance, resistance to mechanical stress, good adhesion to other polyurethane lacquers, insensitivity of the film towards atmospheric moisture as well as traces of grease and oils, and rapid hardening to avoid dust settlement, but also is compatible with propellants, the components of which are capable of being stored for a long periods of time separately in their own pressurised containers and which, after the two components have been mixed, has a storage stability adequate for practical use.

According to this invention this problem has been solved with a method for the preparation of a two-component polyurethane lacquer in which a prepolymer comprising a copolymer containing 1 to 7 wt.% of hydroxyl groups based upon styrene, vinyltoluene, methacrylic acid esters and/or acrylic acid esters with 1 to 8 carbon atoms in the alcohol residue as well as hydroxyalkyl acrylates and/or hydroxyalkyl methacrylates with 2 to 4 carbon atoms in the alcohol residue, or mixtures of such copolymers, as the first component, which may contain also inorganic and/or organic pigments, flow agents, anti-settling agents, thixotropic agents, reaction accelerators, matting agents and other additives, is dissolved in an organic solvent and is filled together with a propellant into a first pressurised container and in which furthermore a hardener based upon a polyisocyanate containing 10 to 25 wt.% NCO groups, dissolved in an organic solvent, is filled as second component together with a propellant into a second pressurised container, and wherein for preparation of the ready-for-use lacquer the one component is transferred from its pressurised container into the pressurised container of the other component and mixed with the said other component, characterised in that (i) for a prepolymer containing up to 2 wt.% hydroxyl groups there is used as propellant propane, butane, monofluorotrichloromethane, difluorodichloromethane, dimethyl ether, nitrogen or mixtures thereof and for a prepolymer containing more than 2 wt.% hydroxyl groups there is used as propellant dimethyl ether or a mixture of dimethyl ether, propane and/or butane, (ii) for the hardener, nitrogen is used as propellant, and (iii) the amounts of the prepolymer present in the first pressurised container and of the polyisocyanate present in the second pressurised container are so proportioned that on combination of the two components a mixture results which contains 60 to 96 wt.% prepolymer and 4 to 40 wt.% hardener.

Surprisingly it has been found that the two-component polyurethane lacquer-propellant combinations defined above are stable for at least a year in respect of the basic lacquer component and the hardener component in separate pressurised containers, whilst the mixture of the two components in a single pressurised container is still sprayable after 2 to 3 days. In distinction from the state of the art, this substantial increase in the application time of the two-component aerosol lacquers ensures there usefulness under all usual practical conditions.

The basic lacquer component contains as prepolymer a copolymer of styrene and/or vinyltoluene, esters of methacrylic acid and/or acrylic acid with 1 to 8 carbon atoms in the alcohol residue as well as hydroxyalkyl acrylates and/or hydroxyalkyl methacrylates with 2 to 4 carbon atoms in the alcohol residue. Examples of such prepolymers are copolymers of:—

1. Methyl methacrylate, ethyl methacrylate or isobutyl methacrylate and hydroxyethyl or hydroxypropyl or hydroxybutyl acrylate and/or the corresponding hydroxyalkyl methacrylates;
2. Styrene and hydroxyethyl or hydroxypropyl or hydroxybutyl acrylate and/or the corresponding hydroxyalkyl methacrylates; and
3. Vinyltoluene and the hydroxyalkyl acrylates and/or methacrylates mentioned in 2.

The components of the copolymers are selected in such a way that the final copolymer contains 1 to 7 wt.%, preferably 1.3 to 6 wt.% of hydroxyl groups.

Frequently it is desirable to make the copolymers more "elastic" than is the case with the above examples 1 to 3. For this purpose one can replace the so-called "hard" monomers methyl methacrylate, styrene and vinyltoluene by up to 50 wt.% of methyl acrylate, ethyl acrylate, butyl acrylate or 2-ethylhexyl acrylate. Such copolymers may for example have the following monomer composition:

40—60 wt.% styrene, vinyltoluene or methyl methacrylate;
10—50 wt.% hydroxyethyl acrylate, hydroxypropyl acrylate or the corresponding methacrylates; and
10—50 wt.% methyl acrylate, ethyl acrylate, butyl acrylate and/or 2-ethylhexyl acrylate.

The preparation of such copolymers is described in German Auslegeschrift 1247006.

The prepolymer as a rule is dissolved in an organic solvent or solvent mixture. Suitable solvents are toluene, xylene, higher boiling aromatic hydrocarbons and their mixtures, acetic acid esters, ketones such as methylethyl ketone or methylisobutyl ketone, ester ethers such as 2-methoxyethyl acetate, and 2-ethoxyethyl acetate and mixtures of them. Methylisobutyl ketone and 2-ethoxyethyl acetate have proved to be especially advantageous solvents. The concentration of the prepolymer in the solution depends upon the viscosity of the solution. The solution should not be too thin since then the film formation of the lacquer is inadequate and the lacquer readily sags: it should also, however, not be too viscous because then adequate atomisation is not achieved but more or less large drops are formed. In general a concentration of 50 to 60 wt.% prepolymer in the solution, or of 30 to 60 wt.% including the solvents from the lacquer recipe, gives a satisfactory application.

Inorganic or organic pigments may be dispersed in the solution of the prepolymer. Examples of inorganic pigments are titanium dioxide, iron (III) oxide (iron oxide red), iron (II, III) oxide (iron oxide black), barium sulphate, lead chromate and silica; examples of organic pigments are phthalocyanines, Heliofast Black (Bayer AG), Permanent Yellow and Permanent Red. The pigments may be used singly or in the form of mixtures. The pigment content in the prepolymer solution may amount to 20 to 45 wt.%.

In addition to pigments, the usual flow agents, anti-settling agents, thixotropic agents, accelerators, matting agents and other additives may be contained in the basic lacquer component.

The prepolymer solution forming the basic lacquer component, which may also contain the above-mentioned pigments and additives, is filled into an aerosol pressurised container in the form of a spray can, into which the propellant is introduced by known methods. With prepolymers which contain 1 to 2 wt.% hydroxyl groups, propane, butane, monofluorotrichloromethane (R11) difluorodichloromethane (R12), dimethyl ether, nitrogen or mixtures thereof are used as propellant. These propellants are also compatible with the reaction mixture of basic lacquer component and hardener component. If the prepolymer of the basic lacquer component contains more than 2 wt.% hydroxyl groups, it is no longer compatible with all the propellants mentioned above: in this case, the best propellant is dimethyl ether. A mixture of dimethyl ether and propane/butane may also be used.

The filling ratio of the basic lacquer component to the propellant depends on the propellant selected and the viscosity of the mixture of prepolymer and propellant. The amount of propellant must be enough to ensure complete emptying of the lacquer from the aerosol can. As the basic lacquer component may consist of various prepolymers with different properties, and many combinations of propellants are possible, no guide values can be given for the filling ratio of basic lacquer component to propellant, but usable filling ratios for the particular basic lacquer component and the particular propellant selected can be determined very quickly by simple spray tests.

The following filling ratios serve as an indication:

30—70 wt.% basic lacquer component with 1 to 2 wt.% hydroxyl groups,
70—30 wt.% R11/12-1090* or R11/12-3070*,

70—90 wt.% basic lacquer component with 1 to 2 wt.% hydroxyl groups,
30—10 wt.% propane,

50—70 wt.% basic lacquer component with 1 to 2 wt.% hydroxyl groups,
50—30 wt.% propane-butane 10/85**,

40—70 wt.% basic lacquer component with 1 to 7 wt.% hydroxyl groups,
60—30 wt.% dimethyl ether,

20—60 wt.% basic lacquer component with 1 to 7 wt.% hydroxyl groups,
40—20 wt.% propane-butane 15/85**,
40—20 wt.% dimethyl ether.

*The two first figures of the four-figure number give the percentage content of R11, the two last figures give the percentage content of R12 in the propellant mixture.
**The number before the oblique gives the parts by weight of propane, the number after the oblique gives the parts by weight of butane in the propellant mixture.

The operating pressure with normal aerosol cans amounts to about 3 to 5 bar at 20°C; this gives an average working pressure on atomisation of 2.5 to 3 bar.

The hardener component of the two-component polyurethane lacquer consists of polyisocyanates containing 10 to 25 wt.% isocyanate groups, dissolved in organic solvents. The polyfunctional isocyanates may be aliphatic or aromatic isocyanates. As hardener component, a reaction product of 3 mol isophorone diisocyanate and 1 mol trimethylolpropane with 15 to 16.5 wt.% NCO-groups, a reaction product of 3 mol toluylene diisocyanate and 1 mol trimethylolpropane with about 17 wt.% of NCO-groups, and an aliphatic triisocyanate containing biuret groups with about 21 wt.% NCO-groups which is obtained by reaction of 3 mol hexamethylene diisocyanate with 1 mol water, have proved to be especially advantageous.

The polyfunctional isocyanate is dissolved in an organic solvent. Suitable solvents are glycol esters of acetic acid and aromatic hydrocarbons. The concentration of the isocyanate in the solvent amounts suitably to 50 to 75 wt.%. The isocyanate solution is filled into a pressurised container e.g. a pressure can with an overflow valve into which nitrogen is then filled as propellant gas. The filling ratio of isocyanate solution to nitrogen is not critical: the amount of nitrogen must be enough in order to empty the isocyanate solution from the pressurised container completely and to reach a final pressure which is higher than the filling pressure of the can containing the basic lacquer component. For normal pressure-atomiser cans, with a permissible internal pressure of 20 bar at 50°C, the pressure amounts to about 12 bar at 20°C.

With the separate storage of the basic lacquer component and the hardener component in their separate cans, the components are storage-stable for about a year.

To obtain a ready-for-use lacquer the hardener component is transferred to the spray can containing the basic lacquer component. This filling is carried out by connecting the overflow valve of the pressurised container containing the hardener with a combined filling and atomisation valve on the spray can containing the basic lacquer component. As the pressurised container containing the hardener is at a higher pressure than is the case with the spray can containing the basic lacquer component, the nitrogen drives the hardener solution into the spray can. After completion of this filling the two lacquer components are mixed with one another by shaking the spray can. The lacquer is then ready for use and can be sprayed. The storage stability of the lacquer containing the hardener amounts to at least 24 hours, often 48 to 72 hours.

The mixing ratio of the basic lacquer component to the hardener component is so selected that the ratio of the hydroxyl groups in the prepolymer to the NCO-groups in the polyfunctional isocyanate hardener is in the range 1:0.8 to 1:1.25. Prepolymers which contain 1.3 to 4 wt.% OH-groups, and which are combined with a polyfunctional isocyanate containing 10 to 25 wt.% NCO-groups in such amounts that for every OH-group there are 1.0 to 1.25 NCO-groups, give lacquers which yield films having good surface hardness and good resistance to solvents. If prepolymers with 4.1 to 6 wt.% OH-groups are combined with polyfunctional isocyanates containing 10 to 25 wt.% NCO-groups in such amounts that there are 1.0 to 1.25 NCO-groups for each hydroxyl group, then lacquers are obtained which give films with good surface hardness, abrasion resistance and good resistance to chemicals.

In order to obtain a ready-for-use lacquer by simple mixing of the basic lacquer component with the hardener component in the spray can, the amount of the prepolymer in the spray can and the amount of isocyanate hardener present in the second pressure container are so proportioned that on combining the two components a mixture is formed which contains 60 to 96 wt.% prepolymer containing hydroxyl groups and 4 to 40 wt.% of polyfunctional isocyanate, both figures being based on the solids composition of the mixture.

The coatings described dry after atomisation from the spray can to be assembly-resistant in about

4

90 to 100 minutes and they then cross-link at room temperature in one to seven days. Full strength properties are attained after about seven days.

The lacquer films have good weather resistance and chemical resistance which increase with increasing content of hydroxyl groups in the prepolymer. They have a high degree of mechanical serviceability, have good adhesion on one- and two-component coatings and do not show, on application to one-component coatings, any lifting of these coatings. On application the two-component polyurethane lacquers are not sensitive to air currents, atmospheric moisture or traces of grease and oil on the substrate. Since they dry rapidly, dirt formation due to dust is largely avoided. No stringent requirements are placed on the pretreatment of the substrate: for old coatings it is good enough to rub down lightly and clean. Due to the rapid drying, the good filling power and the freedom from sagging or running of the applied lacquer, many defects of the substrate are covered over.

The invention is illustrated by the following Examples.

Example 1

Two-component white, silk aerosol lacquer

Basic lacquer component

The starting material for the basic lacquer component was a 60% solution in xylene and butyl acetate of a prepolymer of:—

11 wt.% hydroxyethyl methacrylate,
35 wt.% styrene,
15 wt.% vinyltoluene,
19 wt.% butyl acrylate, and
20 wt.% 2-ethylhexyl acrylate.

The 60% solution of the prepolymer contained 1.36 wt.% hydroxyl groups and a 50% solution of the prepolymer had a viscosity of about 90 sec efflux time, measured in the DIN cup with an efflux nozzle of 4 mm diameter at 20°C. 40 g of the 60% solution was ground with 42 g of a pigment mixture of titanium dioxide and barium sulphate on a roller mill, thinned with the solvents mentioned to a solids content of ca. 66 wt.% and filled into the first spray can. Then an equal amount by weight of R11/12-1090 as propellant was filled into the spray can. The product had a storage stability of at least one year.

Hardener component

7 g of a 67% solution of an aromatic triisocyanate on the basis of 1 mol trimethylolpropane and 3 mol toluylene diisocyanate with a NCO-content of about 17 wt.% based on the solvent-free product, in 2-ethoxyethyl acetate/xylene (1:1 by weight) was filled into a second pressurised container, which was then filled with nitrogen as propellant up to 10 to 12 bar pressure at 20°C. The product had a storage stability of at least one year.

Two-component aerosol mixture

The contents of the second pressurised container (hardener component) were emptied into the first pressurised container (spray can) and mixed with the basic lacquer component by shaking. The mixture could be sprayed and applied satisfactorily for up to 72 hours after preparation. It gave a white, silky lacquer film with all the properties of a high quality two-component polyurethane lacquer.

Example 2

Two-component yellow-orange, glossy aerosol lacquer

Basic lacquer component

The starting material for the basic lacquer component was a 60% solution in 2-ethoxyethyl acetate of a prepolymer of:

11 wt.% hydroxyethyl methacrylate,
35 wt.% styrene,
15 wt.% vinyltoluene,
19 wt.% butyl acrylate, and
20 wt.% 2-ethylhexyl acrylate.

The 60% solution of the prepolymer contained 1.36 wt.% hydroxyl groups and a 50% solution of the prepolymer had a viscosity of about 90 sec efflux time, measured in the DIN cup with an efflux nozzle of 4 mm diameter at 20°C. 46 g of the solution of the prepolymer was ground on a roller mill with a pigment mixture of Permanent Yellow, lead chromate and silica, thinned with the given solvent to a solids content of about 55 wt.% and filled into a spray can. The same amount by weight of R11/12-3070 was filled in as propellant. The product was storage stable for at least one year.

Hardener component

11 g of a 75% solution of an aliphatic triisocyanate containing biuret groups, which was obtained by reaction of 3 mol hexamethylene diisocyanate and 1 mol water and had a NCO-content of about 21 wt.% based on the solvent-free product, was filled into a second pressurised container which was then

5

# O 030 840

filled up with nitrogen to a pressure of about 10 to 12 bar at 20°C. The product was storage stable for at least one year.

Two-component aerosol mixture

The contents of the second pressurised container were combined with the basic lacquer component in the first pressurised container as in Example 1. The mixture could be sprayed and applied satisfactorily for up to 72 hours after preparation. It gave a yellow-orange coloured glossy lacquer film with the properties of a high quality two-component polyurethane lacquer.

In the preceding Examples low-cross-linking lacquers are described. The following Examples illustrate high-cross-linking lacquers.

Example 3

Two-component olive green, matt aerosol lacquer

Basic lacquer component

As prepolymer was used a copolymer of:
49 wt.% hydroxypropyl methacrylate,
11 wt.% methyl methacrylate,
40 wt.% styrene.

The 60% solution of the prepolymer contained 5.8 wt.% hydroxyl groups and a 50% solution in 2-ethoxyethyl acetate had a viscosity of 160 sec measured in the DIN cup with an efflux nozzle of 4 mm diameter at 20°C. 34 g of the 60% solution of this prepolymer in 2-ethoxyethyl acetate was ground in a roller mill with 43 g of a pigment mixture of iron oxide red, iron oxide yellow, chromic oxide, Heliofast Black and barium sulphate, thinned with 23 g of the solvent mentioned and filled into a spray can. To 70 wt.% of this basic lacquer component, 30 wt.% of dimethyl ether was then added as propellant. The storage stability of the product amounted to at least one year.

Hardener component

The hardener component consisted of 20 g of a 75% solution of an aliphatic triisocyanate containing biuret groups which is obtained by reaction of 3 mol hexamethylene diisocyanate and 1 mol water and contains about 21% NCO-groups. The hardener was contained with nitrogen as propellant in a second pressurised container with a filling pressure of about 10 to 12 bar at 20°C and had a storage stability of at least one year.

Two-component aerosol mixture

By combining the basic lacquer component and the hardener component in a spray can a lacquer was obtained which was sprayable at room temperature for up to 48 hours and gave a lacquer film with the properties of a two-component polyurethane lacquer.

Example 4

Two-component light ivory, silk aerosol lacquer

Basic lacquer component

The prepolymer was obtained from:
49 wt.% hydroxypropyl methacrylate,
11 wt.% methyl methacrylate, and
40 wt.% styrene.

The 60% solution of the prepolymer contained 5.8 wt.% hydroxyl groups and a 50% solution in 2-ethoxyethyl acetate had a viscosity of 160 sec measured in the DIN cup with an efflux nozzle of 4 mm diameter at 20°C. 40 g of the 60% solution of this prepolymer in 2-ethoxyethyl acetate were ground in a roller mill with 36 g of a pigment mixture of titanium dioxide, iron oxide yellow, iron oxide red and barium sulphate. After thinning with 24 g of the given solvents 70 wt.% of the basic lacquer component and 30 wt.% of dimethyl ether as propellant were filled into a spray can. The product had a storage stability of at least one year.

Hardener component

The hardener component consisted of 25 g of the product described in Example 3.

Two-component aerosol mixture

The ready-for-use lacquer was obtained as described in Example 3 and could be applied for up to 48 hours. The lacquer film thus obtained had all the properties of a high quality two-component polyurethane lacquer.

Example 5

Two-component light green, high gloss aerosol lacquer

54 g of a 60% solution of the prepolymer described in Example 4 in 2-ethoxyethyl acetate was ground with 21 g of a pigment mixture of titanium dioxide and phthalocyanine green on a roller mill,

6

thinned with 25 g of the given solvents and filled into a spray can. To 70 wt.% of this basic lacquer component was added 30 wt.% of dimethyl ether as propellant. The mixture had a storage stability of at least one year.

As hardener was used the one described in Example 3 of which 33 g were filled into a second pressurised container with nitrogen as propellant.

The lacquer obtained by combining the two components in the spray can was sprayable at room temperature for up to 48 hours and gave lacquer films with all the properties of a high quality two-component polyurethane lacquer.

## Claims

1. Method for the preparation of a product, atomisable from a pressurised atomising container, which is a two-component polyurethane lacquer in which a prepolymer comprising a copolymer containing 1 to 7 wt.% of hydroxyl groups based upon styrene, vinyltoluene, methacrylic acid esters and/or acrylic acid esters with 1 to 8 carbon atoms in the alcohol residue as well as hydroxyalkyl acrylates and/or methacrylates with 2 to 4 carbon atoms in the alcohol residue, or mixtures of such copolymers, as the first component, which may contain also inorganic and/or organic pigments, flow agents, anti-settling agents, thixotropic agents, reaction accelerators, matting agents and other additives, is dissolved in an organic solvent and is filled together with a propellant into a first pressurised container and in which furthermore a hardener based upon a polyisocyanate containing 10 to 25 wt.% NCO-groups, dissolved in an organic solvent, is filled as second component together with a propellant into a second pressurised container, and wherein for preparation of the ready-for-use lacquer the one component is transferred from its pressurised container into the pressurised container of the other component and mixed with the said other component, characterised in that (i) for a prepolymer containing up to 2 wt.% hydroxyl groups there is used as propellant propane, butane, monofluorotrichloromethane, difluorodichloromethane, dimethyl ether, nitrogen or mixtures thereof and for a prepolymer with more than 2 wt.% hydroxyl groups there is used as propellant dimethyl ether or a mixture of dimethyl ether, propane, and/or butane, (ii) for the hardener, nitrogen is used as propellant, and (iii) the amounts of the prepolymer present in the first pressurised container and of the polyisocyanate present in the second pressurised container are so proportioned that on combination of the two components a mixture results which contains 60 to 96 wt.% prepolymer and 4 to 40 wt.% hardener.

2. Method according to claim 1, characterised in that a dissolved prepolymer with up to 2 wt.% hydroxyl groups is filled into the first pressurised container in an amount of 30 to 70 wt.% of the total charge and as the rest of the charge is used monofluorotrichloromethane, difluorodichloromethane or a mixture of 10 to 30 wt.% monofluorotrichloromethane and 90 to 70 wt.% difluorodichloromethane.

3. Method according to claim 1, characterised in that a dissolved prepolymer with up to 2 wt.% hydroxyl groups is filled into the first pressurised container in an amount of 70 to 90 wt.% of the total charge and the rest of the charge is propane.

4. Method according to claim 1, characterised in that a dissolved prepolymer with up to 2 wt.% hydroxyl groups is filled into the first pressurised container in an amount of 50 to 70 wt.% of the total charge and the rest of the charge is a mixture of 15 parts by weight propane and 85 parts by weight butane.

5. Method according to claim 1, characterised in that a dissolved prepolymer with up to 7 wt.% hydroxyl groups is filled into the first pressurised container in an amount of 40 to 60 wt.% of the total charge and the rest of the charge is dimethyl ether.

6. Method according to claim 1, characterised in that a dissolved prepolymer with up to 7 wt.% hydroxyl groups is filled into the first pressurised container in an amount of 20 to 60 wt.% of the total charge, and the rest of the charge is a mixture of 15 parts by weight propane and 85 parts by weight butane in an amount of 40 to 20 wt.% of the total charge and also dimethyl ether in an amount of 40 to 20 wt.% of the total charge.

7. Method according to any one of claims 1 to 6, characterised in that the hardener is filled into the second pressurised container at such a pressure that the pressure in the second pressurised container is greater than the pressure in the first pressurised container containing the prepolymer.

8. Method according to any one of claims 1 to 7, characterised in that the prepolymer is filled into the first pressurised container at such a pressure that the pressure in the first pressurised container amounts to 3 to 5 bar at 20°C and that the hardener is filled into the second pressurised container at such a pressure that the pressure in the second pressurised container amounts to 12 bar at 20°C.

## Patentansprüche

1. Verfahren zur Herstellung eines aus einem unter Druck stehenden Zerstäuberbehälter zerstäubbaren Produktes, und zwar eines Zweikomponenten-Polyurethanlackes, wobei ein Präpolymer, enthaltend ein Copolymer mit 1 bis 7 Gew.-% Hydroxylgruppen auf Basis von Styrol, Vinyltoluol, Methacrylsäureestern und/oder Acrylsäureestern mit 1 bis 8 Kohlenstoffatomen im Alkoholrest sowie

7

Hydroxyalkylacrylaten und/oder -methacrylaten mit 2 bis 4 Kohlenstoffatomen im Alkoholrest, oder Mischungen solcher Copolymere als erste Komponente, die gegebenenfalls auch anorganische und/oder organische Pigmente, Fließmittel, das Absetzen verhindernde Mittel, thixotrope Mittel, Reaktionsbeschleuniger, Mattierungsmittel und andere Zusätze enthält, in einem organischen Lösungsmittel gelöst und zusammen mit einem Treibmittel in einen ersten Druckbehälter gefüllt wird und außerdem ein Härter auf Basis eines Polyisocyanats mit 10 bis 25 Gew.-% NCO-Gruppen, gelöst in einem organischen Lösungsmittel, als zweite Komponente zusammen mit einem Treibmittel in einen zweiten Druckbehälter gefüllt wird und zur Herstellung des gebrauchsfertigen Lackes die eine Komponente aus ihrem Druckbehälter in den Druckbehälter der anderen Komponente eingebracht und mit dieser anderen Komponente gemischt wird, dadurch gekennzeichnet, daß man (i) für ein Präpolymer mit bis zu 2 Gew.-% Hydroxylgruppen Propan, Butan, Monofluortrichlormethan, Difluordichlormethan, Dimethyläther, Stickstoff oder Mischungen davon als Treibmittels verwendet und für ein Präpolymer mit mehr als 2 Gew.-% Hydroxylgruppen Dimethyläther oder eine Mischung von Dimethyläther, Propan und/oder Butan als Treibmittel verwendet, (ii) für den Härter Stickstoff als Treibmittel verwendet und (iii) die Mengen des im ersten Druckbehälter vorhandenen Präpolymeren und des im zweiten Druckbehälter vorhandenen Polyisocyanats so abstimmt, daß bei Vereinigung der beiden Komponenten eine Mischung entsteht, die 60 bis 96 Gew.-% Präpolymer und 4 bis 40 Gew.-% Härter enthält.

2. Verfahren nach Anspruch 1, dadurch gekennzeichnet, daß man ein gelöstes Präpolymer mit bis zu 2 Gew.-% Hydroxylgruppen in den ersten Druckbehälter in einer Menge von 30 bis 70 Gew.-% der Gesamtfüllmenge und als Restfüllmenge Monofluortrichlormethan, Difluordichlormethane oder eine Mischung von 10 bis 30 Gew.-% Monofluortrichlormethan und 90 bis 70 Gew.-% Difluordichlormethan einfüllt.

3. Verfahren nach Anspruch 1, dadurch gekennzeichnet, daß man in den ersten Druckbehälter ein gelöstes Präpolymer mit bis zu 2 Gew.-% Hydroxylgruppen in einer Menge von 70 bis 90 Gew.-% der Gesamtfüllmenge und als Restfüllmenge Propan einfüllt.

4. Verfahren nach Anspruch 1, dadurch gekennzeichnet, daß man in den ersten Druckbehälter ein gelöstes Präpolymer mit bis zu 2 Gew.-% Hydroxylgruppen in einer Menge von 50 bis 70 Gew.-% der Gesamtfüllmenge und als Restfüllmenge eine Mischung von 15 Gew.-Teilen Propan und 85 Gew.-Teilen Butan einfüllt.

5. Verfahren nach Anspruch 1, dadurch gekennzeichnet, daß man in den ersten Druckbehälter ein gelöstes Präpolymer mit bis zu 7 Gew.-% Hydroxylgruppen in einer Menge von 40 bis 60 Gew.-% der Gesamtfüllmenge und als Restfüllmenge Dimethyläther einfüllt.

6. Verfahren nach Anspruch 1, dadurch gekennzeichnet, daß man in den ersten Druckbehälter ein gelöstes Präpolymer mit bis zu 7 Gew.-% Hydroxylgruppen in einer Menge von 20 bis 60 Gew.-% der Gesamtfüllmenge und als Restfüllmenge eine Mischung von 15 Gew.-Teilen Propan und 85 Gew.-Teilen Butan in einer Menge von 40 bis 20 Gew.-% der Gesamtfüllmenge und ebenso Dimethyläther in einer Menge von 40 bis 20 Gew.-% der Gesamtfüllmenge einfüllt.

7. Verfahren nach einem der Ansprüche 1 bis 6, dadurch gekennzeichnet, daß man den Härter in den zweiten Druckbehälter mit einem solchen Druck einfüllt, daß der Druck im zweiten Druckbehälter größer ist als der Druck im ersten das Präpolymer enthaltenden Druckbehälter.

8. Verfahren nach einem der Ansprüche 1 bis 7, dadurch gekennzeichnet, daß das Präpolymer in den ersten Druckbehälter mit einem solchen Druck eingefüllt wird, daß der Druck im ersten Druckbehälter 3 bis 5 bar bei 20°C beträgt, und daß der Härter in den zweiten Druckbehälter mit einem solchen Druck eingefüllt wird, daß der Druck im zweiten Druckbehälter 12 bar bei 20°C beträgt.

**Revendications**

1. Procédé de préparation d'un produit atomisable à partir d'un récipient d'atomisation sous pression, qui est une laque de polyuréthanne à deux composants, suivant lequel un prépolymère comprenant un copolymère qui contient 1 à 7% en poids de radicaux hydroxyle à base de styrène de vinyltoluène, d'esters d'acide méthacrylique et/ou d'esters d'acide acrylique de 1 à 8 atomes de carbone dans le reste d'alcool, ainsi que d'acrylates d'hydroxyalcoyle et/ou de méthacrylates d'hydroxyalcoyle de 2 à 4 atomes de carbone dans le reste d'alcool, ou des mélanges de tels copolymères, comme premier composant, qui peut également contenir des pigments inorganiques et/ou organiques, des agents d'écoulement, des agents antisédimentation, des agents thixotropiques, des accélérateurs de réaction, des agents de matité et d'autres additifs, est dissous dans un solvant organique et est introduit, en association avec un propulseur, dans un premier récipient sous pression et suivant lequel, en outre, un durcisseur à base d'un polyisocyanate contenant 10 à 25% en poids de radicaux NCO, en solution dans un solvant organique, est introduit comme second composant, en association avec un propulseur, dans un second récipient sous pression et, pour la préparation de la laque prête à l'usage, un composant est transféré de son récipient sous pression dans le récipient sous pression de 'autre composant et mélangé avec cet autre composant, caractérisé en ce que (i) pour un prépolymère contenant jusqu'à 2% en poids de radicaux hydroxyle, on utilise comme propulseur le propane, le butane, le monofluorotrichlorométhane, le difluorodichlorométhane, l'éther diméthylique, l'azote ou des mélanges de ceux-ci et, pour un prépolymère contenant plus de 2% en poids de radicaux hydroxyle, on utilise comme propulseur de l'éther diméthylique ou un mélange d'éther diméthylique, de propane et/ou de butane, (ii) pour le durcisseur, on utilise de l'azote comme propulseur et (iii) les quantités du prépolymère présent dans le premier récipient sous pression et du polyisocyanate présent dans le second récipient sous pression sont proportionnées de façon que par combinaison des deux composants, il se forme un mélange qui contient 60 à 96% en poids de prépolymère et 4 à 40% en poids de durcisseur.

2. Procédé suivant la revendication 1, caractérisé en ce qu'on introduit un prépolymère dissous contenant jusqu'à 2% en poids de radicaux hydroxyle dans le premier récipient sous pression en une quantité de 30 à 70% en poids de la charge totale et, comme reste de la charge, on utilise du monofluorotrichlorométhane, du difluorodichlorométhane ou un mélange de 10 à 30% en poids de monofluorotrichlorométhane et de 90 à 70% en poids le difluorodichlorométhane.

3. Procédé suivant la revendication 1, caractérisé en ce qu'on introduit un prépolymère dissous contenant jusqu'à 2% en poids de radicaux hydroxyle dans le premier récipient sous pression en une quantité de 70 à 90% en poids de la charge totale et le reste de la charge est du propane.

4. Procédé suivant la revendication 1, caractérisé en ce qu'on introduit un prépolymère dissous contenant jusqu'à 2% en poids de radicaux hydroxyle dans le premier récipient sous pression en une quantité de 50 à 70% en poids de la charge totale et le reste de la charge est un mélange de 15 parties en poids de propane et de 85 parties en poids de butane.

5. Procédé suivant la revendication 1, caractérisé en ce qu'on introduit un prépolymère dissous contenant jusqu'à 7% en poids de radicaux hydroxyle dans le premier récipient sous pression en une quantité de 40 à 60% en poids de la charge totale et le reste de la charge est de l'éther diméthylique.

6. Procédé suivant la revendication 1, caractérisé en ce qu'on introduit un prépolymère dissous contenant jusqu'à 7% en poids de radicaux hydroxyle dans le premier récipient sous pression en une quantité de 20 à 60% en poids de la charge totale et le reste de la charge est un mélange de 15 parties en poids de propane et de 85 parties en poids de butane en une quantité de 40 à 20% en poids de la charge totale et aussi de l'éther diméthylique en une quantité de 40 à 20% en poids de la charge totale.

7. Procédé suivant l'une quelconque des revendications 1 à 6, caractérisé en ce qu'on introduit le durcisseur dans le second récipient sous pression sous une pression telle que la pression dans le second récipient sous pression soit supérieure à la pression dans le premier récipient sous pression contenant le prépolymère.

8. Procédé suivant l'une quelconque des revendications 1 à 7, caractérisé en ce qu'on introduit le prépolymère dans le premier récipient sous pression sous une pression telle que la pression dans le premier récipient sous pression s'élève à 3 à 5 bars à 20°C et on introduit le durcisseur dans le second récipient sous pression sous une pression telle que la pression dans le second récipient sous pression s'élève à 12 bars à 20°C.